# EUROPÄISCHE PATENTSCHRIFT

(11) **EP 1 422 910 B1**
(45) Veröffentlichungstag und Bekanntmachung des Hinweises auf die Patenterteilung: **22.05.2013**
(21) Anmeldenummer: 03104058.7
(22) Anmeldetag: 03.11.2003
(51) Int. Cl.: H04L 29/12, H04L 29/14, H04L 29/06

(54) **Betriebsmodus für ein Kommunikationssystem**
Mode of operation for a communication system
Mode de fonctionnement pour un système de communication

(30) Priorität: 25.11.2002 DE 10254904
(43) Veröffentlichungstag der Anmeldung: 26.05.2004
(73) Patentinhaber: Siemens Enterprise Communications GmbH & Co. KG, 81379 München (DE)
(72) Erfinder: Schaade, Stephan, 86807 Buchloe (DE)
(74) Vertreter: Fritzsche, Thomas

(56) Entgegenhaltungen:
- US-A- 5 625 887
- "Packet-based multimedia communications systems; H.323 (11/00)", ITU-T STANDARD SUPERSEDED (S), INTERNATIONAL TELECOMMUNICATION UNION, GENEVA, CH, Nr. H.323 (11/00), 1. November 2000 (2000-11-01), XP017401474,
- "Call signalling protocols and media stream packetization for packet-based multimedia communication systems; H.225.0 (11/00)", ITU-T STANDARD SUPERSEDED (S), INTERNATIONAL TELECOMMUNICATION UNION, GENEVA, CH, Nr. H.225.0 (11/00), 1. November 2000 (2000-11-01), XP017401325,

## Beschreibung

Die Erfindung betrifft ein Kommunikationssystem bestehend aus mehreren Kommunikationseinrichtungen, mehreren Kommunikationsendgeräten und einem die Kommunikationsendgeräte mit den Kommunikationseinrichtungen verbindenden Kommunikationsnetz, wobei in den Kommunikationsendgeräten jeweils eine erste Adresse für eine Verbindung mit einer dem jeweiligen Kommunikationsendgerät zugeordneten Heimat-Kommunikationseinrichtung und eine zweite Adresse für eine Verbindung mit einer Alternativ-Kommunikationseinrichtung gespeichert sind.

Aufgrund einer zunehmenden globalen Ausrichtung von Unternehmen nimmt die Nutzung von Telekommunikationsdiensten zur Übermittlung von Sprache und Daten ständig zu. Dies hat zur Folge, dass die durch diese Telekommunikationsdienste verursachten Kosten ständig steigen und zu einem erheblichen Kostenfaktor für die Unternehmen werden, die Möglichkeiten zur Reduzierung dieser Kosten suchen. Eine Möglichkeit Daten kostengünstig und weltweit übermitteln zu können, bieten lokale und globale Computernetzwerke, wie beispielsweise ein 'Intranet' oder das 'Internet'. Hierbei werden auch vermehrt echtzeit-kritische Daten, beispielsweise Sprach- und Videodaten, über derartige lokale und globale paket orientierte Netzwerke übermittelt.

Im 'Intranet' bzw. 'Internet' kommunizieren jeweils ein oder mehrere zentrale Einrichtungen - in der Literatur als Server bezeichnet - untereinander oder mit entfernt angeordneten dezentralen Einrichtungen - in der Literatur als Clients bezeichnet. Beispiele für dezentrale Einrichtungen sind stationäre oder tragbaren Computer, IP-fähige Telefone, etc.. Die Kommunikation erfolgt unter Verwendung von sogenannten Internetprotokollen, insbesondere dem TCP/IP-Protokoll (Transmission Control Protocol / Internet Protocol). Hierzu ist in den jeweiligen zentralen und dezentralen Einrichtungen jeweils eine Software - in der Literatur häufig als 'Socket' oder 'TCP/IP-Stack' bezeichnet - implementiert, die das TCP/IP-Protokoll verstehen und auswerten kann.

Für eine Übermittlung von Sprachdaten ausgehend von oder zu einem IP-fähigen Endgerät sind in einem Computernetzwerk in der Regel spezielle zentrale Einrichtungen vorgesehen, die in der Literatur als Gatekeeper bezeichnet werden. Hierbei ist jedem IP-fähigen Endgerät in der Regel ein Gatekeeper fest zugeordnet, der im weiteren als Heimat-Gatekeeper bezeichnet wird. Ein Gatekeeper hat dabei die Funktion eines zentralen Steuerelements, der einen Verbindungsaufbau zu oder von dem IP-fähigen Endgerät über das Computernetzwerk steuert. Hierzu sind in dem Gatekeeper endgeräte-spezifische Daten - im weiteren als Endgeräte-Profil bezeichnet - gespeichert, mittels der die Steuerung des Verbindungsaufbaus bzw. der aufgebauten Verbindung erfolgt. Die endgeräte-spezifischen Daten umfassen dabei unter anderem eine dem Endgerät zugeordnete Rufnummer, dem Endgerät bzw. einem dem Endgerät zugeordneten Teilnehmer zugeordnete Berechtigungen, für das Endgerät gespeicherte Tastenbelegungen, etc.

Zusätzlich zur Speicherung des Endgeräte-Profils im Heimat-Gatekeeper wird für jedes Endgerät ein weiteres Endgeräte-Profil in einem Alternativ-Gatekeeper gespeichert, so dass in Fällen, in denen der Heimat-Gatekeeper bzw. ein dem Heimat-Gatekeeper zugeordneter Teil des Computernetzwerks ausfällt, bzw. gestört ist, der Verbindungsaufbau bzw. die Verbindung über den Alternativ-Gatekeeper geführt werden kann.

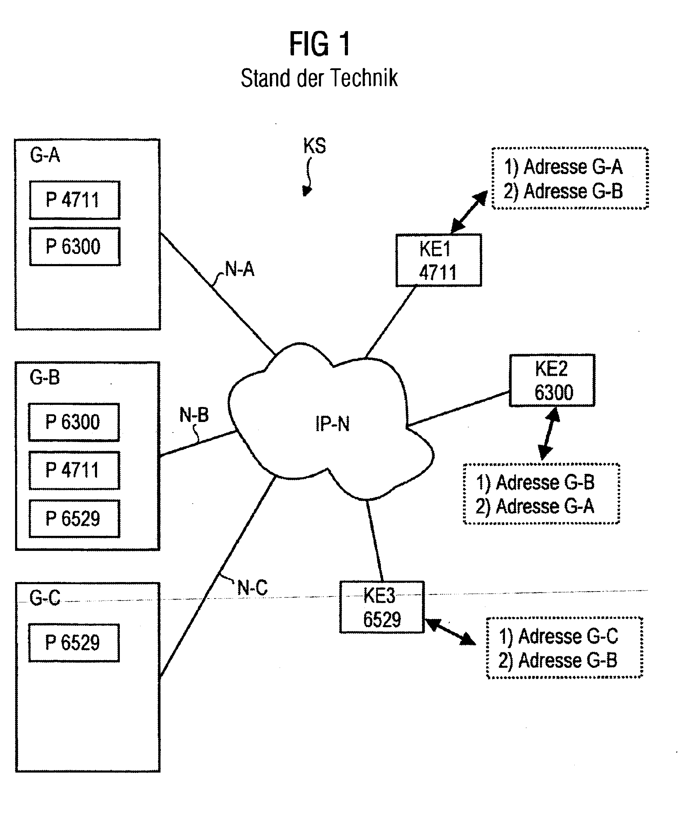

Fig. 1 zeigt ein Strukturbild eines gemäß dem Stand der Technik ausgestalteten Kommunikationssystems KS mit mehreren Gatekeepern G-A, G-B, G-C, mehreren Kommunikationsendgeräten KE1, KE2, KE3 und einem die Kommunikationsendgeräte KE1, KE2, KE3 mit den Gatekeepern G-A, G-B, G-C verbindenden Kommunikationsnetz IP-N. Im vorliegenden Ausführungsbeispiel basiert eine Datenübermittlung über das Kommunikationsnetz IP-N auf dem IP-Protokoll (Internet Protocol), wobei die Kommunikationsendgeräte KE1, KE2, KE3 IP-fähige Endgeräte sind. Alternativ kann das Kommunikationsnetz IP-N auch als Mobilfunknetz und die Kommunikationsendgeräte KE1, KE2, KE3 als Mobilfunkendgeräte ausgestaltet sein. Ein solches Kommunikationssystem und ein entsprechendes Verfahren zu dessen Betrieb sind beispielsweise beschrieben in "Packet-based multimedia communications systems; H.323 (11/00)", ITU-T STANDARD, 1. November 2000.

Ein erster Gatekeeper G-A ist über ein Netzwerksegment N-A, ein zweiter Gatekeeper G-B über ein Netzwerksegment N-B und ein dritter Gatekeeper G-C über ein Netzwerksegment N-C mit dem Kommunikationsnetz IP-N verbunden. Einem ersten Kommunikationsendgerät KE1 mit der Rufnummer 4711 ist der erste Gatekeeper G-A als Heimat-Gatekeeper zugeordnet. Im ersten Gatekeeper G-A ist somit ein dem ersten Kommunikationsendgerät KE1 zugeordnetes Endgeräte-Profil P4711 gespeichert. Einem zweiten Kommunikationsendgerät KE2 mit der Rufnummer 6300 ist der zweite Gatekeeper G-B als Heimat-Gatekeeper zugeordnet. Im zweiten Gatekeeper G-B ist somit ein dem zweiten Kommunikationsendgerät KE2 zugeordnetes Endgeräte-Profil P6300 gespeichert. Einem dritten Kommunikationsendgerät KE3 mit der Rufnummer 6529 ist der dritte Gatekeeper G-C als Heimat-Gatekeeper zugeordnet. Im dritten Gatekeeper G-C ist somit ein dem dritten Kommunikationsendgerät KE3 zugeordnetes Endgeräte-Profil P6529 gespeichert.

Für eine Verbindung mit dem ersten Gatekeeper G-A ist im ersten Kommunikationsendgerät KE1 die Adresse des ersten Gatekeepers G-A gespeichert. Für den Fall einer Störung bzw. eines Ausfalls des ersten Gatekeepers G-A bzw. des Netzwerksegments N-A ist im ersten Kommunikationsendgerät KE1 zusätzlich die Adresse eines Alternativ-Gatekeepers - im vorliegenden Ausführungsbeispiel des zweiten Gatekeepers G-B - gespeichert. Für eine Steuerung eines Verbindungsaufbaus bzw. einer Verbindung mit dem ersten Kommunikationsendgerät KE1 ist im zweiten Gatekeeper G-B zusätzlich zum Endgeräte-Profil P6300 des zweiten Kommunikationsendgerätes KE2 ein dem ersten Kommunikationsendgerät KE1 zugeordnetes Endgeräte-Profil P4711 gespeichert.

Für eine Verbindung mit dem zweiten Gatekeeper G-B ist im zweiten Kommunikationsendgerät KE2 die Adresse des zweiten Gatekeepers G-B gespeichert. Für den Fall einer Störung bzw. eines Ausfalls des zweiten Gatekeepers G-B bzw. des Netzwerksegments N-B ist im zweiten Kommunikationsendgerät KE2 zusätzlich die Adresse des ersten Gatekeepers G-A als Alternativ-Gatekeeper gespeichert. Für eine Steuerung eines Verbindungsaufbaus bzw. einer Verbindung mit dem zweiten Kommunikationsendgerät KE2 ist im ersten Gatekeeper G-A somit zusätzlich zum Endgeräte-Profil P4711 des ersten Kommunikationsendgerätes KE1 ein dem zweiten Kommunikationsendgerät KE2 zugeordnetes Endgeräte-Profil P6300 gespeichert.

Für eine Verbindung mit dem dritten Gatekeeper G-C ist im dritten Kommunikationsendgerät KE3 die Adresse des dritten Gatekeepers G-C gespeichert. Für den Fall einer Störung bzw. eines Ausfalls des dritten Gatekeepers G-C bzw. des Netzwerksegments N-C ist im dritten Kommunikationsendgerät KE3 zusätzlich die Adresse des zweiten Gatekeepers G-B als Alternativ-Gatekeeper gespeichert. Für eine Steuerung eines Verbindungsaufbaus bzw. einer Verbindung mit dem dritten Kommunikationsendgerät KE3 ist im zweiten Gatekeeper G-B somit zusätzlich zu den Endgeräte-Profilen P6300 und P4711 des zweiten und des ersten Kommunikationsendgerätes KE2, KE1 ein dem dritten Kommunikationsendgerät KE3 zugeordnetes Endgeräte-Profil P6529 gespeichert.

Somit wird gemäß dem Stand der Technik für jedes Kommunikationsendgerät bzw. Teilnehmer das Endgeräte-Profil mit Rufnummer, Berechtigungen, etc. doppelt - im Heimat-Gatekeeper und im Alternativ-Gatekeeper - vorgehalten. Dies belastet in einem erheblichen Umfang die Ressourcen - z.B. Datenbasen der Gatekeeper - des Kommunikationssystems. Zudem ist für die doppelte Vorhaltung und gegebenenfalls Aktualisierung der Endgeräte-Profile ein hoher administrativer Aufwand notwendig.

Aus der US 5,625,887 ist ein Verfahren für den Zugriff auf ein Kommunikationssystem durch nicht-registrierte Kommunikationseinheiten bekannt. Bei diesem Verfahren werden lediglich sogenannte default features, also ein Standardprofil, benutzt, damit die (noch) nicht registrierten Kommunikationseinheiten auf das Kommunikationssystem zugreifen können, bis sie registriert sind. Dieser Fall tritt beispielsweise bei einem Datenverlust oder einem neuen Systemstart auf.

Der vorliegenden Erfindung liegt daher die Aufgabe zugrunde, Maßnahmen vorzusehen, durch welche bei einem Ausfall oder einer Nicht-Erreichbarkeit des Heimat-Gatekeepers eines Kommunikationssystems die Ausführung eines Verbindungsaufbaus über einen Alternativ-Gatekeeper so ermöglicht wird, dass einerseits Ressourcen im Kommunikationssystem eingespart werden können und andererseits das entsprechende Kommunikationsendgerät identifizierbar bleibt.

Gelöst wird die Aufgabe ausgehend von den Merkmalen des Oberbegriffs des Patentanspruchs 1 bzw. 9 durch deren kennzeichnende Merkmale.

Erfindungsgemäß wird hierfür in den Kommunikationseinrichtungen jeweils mindestens ein standardisierte Endgeräte-Daten umfassendes Endgeräte-Profil gespeichert, durch das eine begrenzte Anzahl von den Kommunikationsendgeräten zuweisbaren Rufnummern verwaltbar ist und das ein Standardprofil umfasst und das unterschiedlichen mittels der zweiten Adresse auf die Alternativ-Kommunikationseinrichtung zugreifenden Kommunikationsendgeräten zuweisbar ist, und zwar derart, dass diesen Kommunikationsendgeräten für einen Verbindungsaufbau temporär eine Rufnummer und das entsprechende Standardprofil zuweisbar sind, wobei bei einer von einem Kommunikationsendgerät initialisierten Verbindung anstelle der temporär vergebenen Rufnummer die von der Heimat-Kommunikationseinrichtung zugeordnete Rufnummer als Absenderadresse mitübermittelt wird. Unter Kommunikationseinrichtung wird beim vorliegenden Anmeldungsgegenstand eine an ein IP-basiertes Kommunikationsnetz angeschlossene Einrichtung mit Gatekeeper-Funktionalität verstanden. Es wird somit erfindungsgemäß ein Standardprofil für alle Endgeräte bzw. Teilnehmer verwendet, die bedingt durch die fehlende Erreichbarkeit ihrer Heimat-Kommunikationseinrichtung die Alternativ-Kommunikationseinrichtung adressieren. Somit besteht nicht mehr die Notwendigkeit, für jedes Endgerät bzw. jeden Teilnehmer ein teilnehmer-spezifisches Endgeräte-Profil in einer Alternativ-Kommunikationseinrichtung vorzuleisten, sondern es ist ausreichend, pro Alternativ-Kommunikationseinrichtung ein sogenanntes "Asyl-Profil" vorzusehen. Außerdem ist jeder Teilnehmer so jederzeit identifizierbar und lokalisierbar.

Ein wesentlicher Vorteil des erfindungsgemäßen Verfahrens besteht darin, dass sich - insbesondere in großen Systemen - der Aufwand für die Einrichtung und Administration von Endgeräte-Profilen erheblich reduziert. Beispielsweise müssten bei einem System mit 10 Kommunikationseinrichtungen und 10.000 Kommunikationsendgeräten nach dem Stand der Technik 20.000 Endgeräte-Profile und damit auch Rufnummern vorgeleistet werden. Durch das erfindungsgemäße Verfahren wird erreicht, dass beispielsweise bei einem Erlang-Wert von 0,1 eine Bevorratung von 100 zuweisbaren Rufnummern pro Kommunikationseinrichtung und die Festlegung nur eines Asyl-Profils pro Kommunikationseinrichtung ausreichend ist. Die Gesamtzahl der im Kommunikationssystem benötigten Rufnummern beträgt beim erfindungsgemäßen Verfahren somit lediglich 11.000 bei 10.000 Endgeräte-Profilen zuzüglich 10 Asyl-Profilen.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, dass durch die Einrichtung einer Anrufumleitung von der Heimat-Kommunikationseinrichtung zur Alternativ-Kommunikationseinrichtung auf einfache Weise die Erreichbarkeit eines Teilnehmers bzw. des dem Teilnehmer zugeordneten Kommunikationsendgerätes auch in den Fällen gegeben ist, in denen die Heimat-Kommunikationseinrichtung bzw. ein der Heimat-Kommunikationseinrichtung zugeordnetes Netzsegment gestört bzw. sogar ausgefallen ist.

Ein Ausführungsbeispiel der Erfindung wird im folgenden anhand der Zeichnung näher erläutert.

Dabei zeigen:
- Fig. 1:: ein Strukturbild eines Kommunikationssystems mit nach dem Stand der Technik vorgehaltenen Endgeräte-Profilen; und
- Fig. 2:: ein Strukturbild des Kommunikationssystems mit erfindungsgemäßen Endgeräte- und Asyl-Profilen.

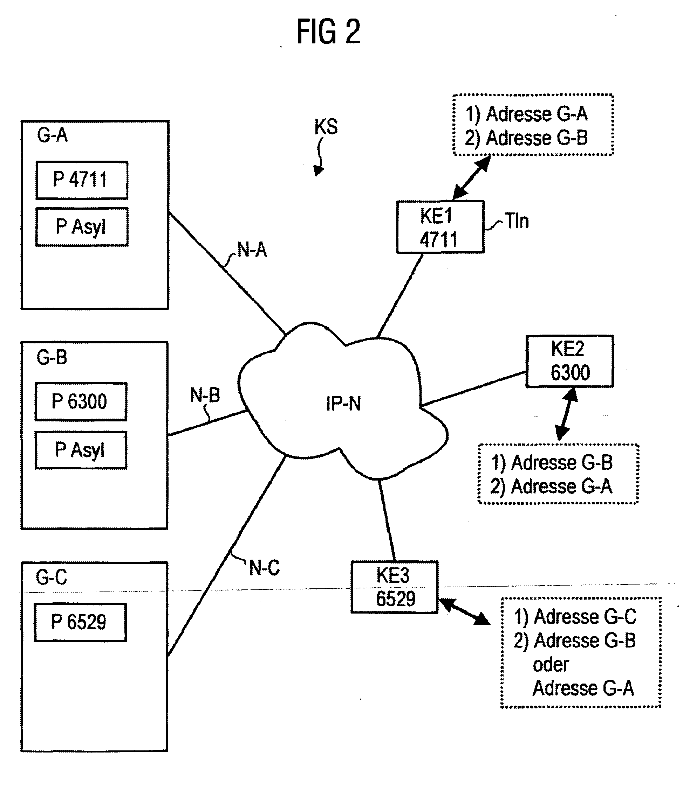

Fig. 2 zeigt ein erfindungsgemäßes Kommunikationssystems KS mit mehreren Gatekeepern G-A, G-B, G-C, mehreren Kommunikationsendgeräten KE1, KE2, KE3 und einem die Kommunikationsendgeräte KE1, KE2, KE3 mit den Gatekeepern G-A, G-B, G-C verbindenden IP-basierten Kommunikationsnetz IP-N. Ein erster Gatekeeper G-A ist über ein Netzwerksegment N-A, ein zweiter Gatekeeper G-B über ein Netzwerksegment N-B und ein dritter Gatekeeper G-C über ein Netzwerksegment N-C mit dem IP-basierten Kommunikationsnetz IP-N verbunden. Im vorliegenden Ausführungsbeispiel sind die Gatekeeper G-A, G-B, G-C durch Kommunikationsanlagen, z.B. die Kommunikationsanlagen Hicom oder HiPath der Firma Siemens AG realisiert.

In der Regel ist jedem Kommunikationsendgerät KE1, KE2, KE3 ein Gatekeeper G-A, G-B, G-C fest zugeordnet, über den eine Verbindung von oder zu dem Kommunikationsendgerät KE1, KE2, KE3 geführt wird. Ein derartiger Gatekeeper G-A, G-B, G-C wird im weiteren als Heimat-Gatekeeper bezeichnet. Einem ersten Kommunikationsendgerät KE1 mit der Rufnummer 4711 ist der erste Gatekeeper G-A als Heimat-Gatekeeper zugeordnet. Im ersten Gatekeeper G-A ist somit ein dem ersten Kommunikationsendgerät KE1 zugeordnetes Endgeräte-Profil P4711 gespeichert. Einem zweiten Kommunikationsendgerät KE2 mit der Rufnummer 6300 ist der zweite Gatekeeper G-B als Heimat-Gatekeeper zugeordnet. Im zweiten Gatekeeper G-B ist somit ein dem zweiten Kommunikationsendgerät KE2 zugeordnetes Endgeräte-Profil P6300 gespeichert. Einem dritten Kommunikationsendgerät KE3 mit der Rufnummer 6529 ist der dritte Gatekeeper G-C als Heimat-Gatekeeper zugeordnet. Im dritten Gatekeeper G-C ist somit ein dem dritten Kommunikationsendgerät KE3 zugeordnetes Endgeräte-Profil P6529 gespeichert. Bei den Kommunikationsendgeräten KE1, KE2, KE3 handelt es sich um IP-fähige Endgeräte, beispielsweise IP-Telefone oder tragbare bzw. stationäre Computer mit einer entsprechenden auf dem Computer ablaufenden Telefonapplikation.

Im ersten Kommunikationsendgerät KE1 ist für eine Verbindung mit dem ersten Gatekeeper G-A - dem Heimat-Gatekeeper des ersten Kommunikationsendgerätes KE1 - die Adresse des ersten Gatekeepers G-A gespeichert. Für den Fall einer Störung bzw. eines Ausfalls des ersten Gatekeepers G-A bzw. des Netzwerksegments N-A ist im ersten Kommunikationsendgerät KE1 zusätzlich die Adresse eines Alternativ-Gatekeepers - im vorliegenden Ausführungsbeispiel des zweiten Gatekeepers G-B - gespeichert. Für eine Verbindung mit dem zweiten Gatekeeper G-B - dem Heimat-Gatekeeper des zweiten Kommunikationsendgerätes KE2 - ist im zweiten Kommunikationsendgerät KE2 die Adresse des zweiten Gatekeepers G-B gespeichert. Für den Fall einer Störung bzw. eines Ausfalls des zweiten Gatekeepers G-B bzw. des Netzwerksegments N-B ist im zweiten Kommunikationsendgerät KE2 zusätzlich die Adresse des ersten Gatekeepers G-A als Alternativ-Gatekeeper gespeichert. Für eine Verbindung mit dem dritten Gatekeeper G-C - dem Heimat-Gatekeeper des dritten Kommunikationsendgerätes KE3 - ist im dritten Kommunikationsendgerät KE3 die Adresse des dritten Gatekeepers G-C gespeichert. Für den Fall einer Störung bzw. eines Ausfalls des dritten Gatekeepers G-C bzw. des Netzwerksegments N-C ist im dritten Kommunikationsendgerät KE3 zusätzlich die Adresse des zweiten Gatekeepers G-B oder alternativ des ersten Gatekeepers G-A als Alternativ-Gatekeeper gespeichert.

Da der erste und der zweite Gatekeeper G-A, G-B jeweils als Alternativ-Gatekeeper vorgesehen sind, ist im ersten Gatekeeper G-A zusätzlich zum Endgeräte-Profil P4711 für das erste Kommunikationsendgerät KE1 ein Asyl-Profil PAsyl gespeichert. Analog hierzu ist im zweiten Gatekeeper G-B zusätzlich zum Endgeräte-Profil P6300 für das zweite Kommunikationsendgerät KE2 ebenfalls ein Asyl-Profil PAsyl hinterlegt.

Das Asyl-Profil PAsyl wird einem Kommunikationsendgerät KE1, KE2, KE3 in Fällen zugeordnet, in denen sich das Kommunikationsendgerät KE1, KE2, KE3 in einem sogenannten Asyl-Modus am ersten oder zweiten Gatekeeper G-A, G-B anmeldet. Für eine Anmeldung im Asyl-Modus übermittelt ein Kommunikationsendgerät KE1, KE2, KE3 die dem Kommunikationsendgerät KE1, KE2, KE3 ursprüngliche - vom Heimat-Gatekeeper G-A, G-B, G-C zugeordnete - Rufnummer 4711, 6300, 6529, die dem Kommunikationsendgerät KE1, KE2, KE3 im IP-basierten Kommunikationsnetz IP-N zugeordnete IP-Adresse und zusätzlich eine sogenannte Asyl-Information. Im Unterschied zu den herkömmlichen Endgeräte-Profilen P4711, P6300, P6529 die jeweils nur einem bestimmten Kommunikationsendgerät KE1, KE2, KE3 zuweisbar sind, ist das Asyl-Profil PAsyl beliebigen Kommunikationsendgeräten KE1, KE2, KE3 zuweisbar.

Das Asyl-Profil umfasst im Wesentlichen eine begrenzte Anzahl von den Kommunikationsendgeräten KE1, KE2, KE3 zuweisbaren Rufnummern und ein Standardprofil. Im Rahmen des Standardprofils werden beispielsweise zuweisbare Berechtigungen, Tastenbelegungen für das Kommunikationsendgerät KE1, KE2, KE3 und Teilnehmernamen für das Kommunikationssystem KS verwaltet. Hierbei besteht die Möglichkeit für unterschiedliche Teilnehmer unterschiedliche Berechtigungen zu definieren. So können wichtigen Teilnehmern - in der Literatur häufig als VIP-Teilnehmer bezeichnet - umfassendere Berechtigungen als weniger wichtigen Teilnehmern zugewiesen werden. Beispielsweise ist denkbar, bestimmten Teilnehmern eine "Amtsberechtigung" zuzuweisen, wobei anderen Teilnehmern die "Amtsberechtigung" untersagt wird. Unter "Amtsberechtigung" wird dabei allgemein die Berechtigung für eine Verbindung mit einer externen, d.h. nicht im Kommunikationssystem KS angeordneten Endstelle verstanden.

Des Weiteren besteht die Möglichkeit, für unterschiedliche Gatekeeper G-A, G-B, G-C unterschiedliche Asyl-Profile PAsyl zu definieren, wobei den unterschiedlichen Asyl-Profilen PAsyl unterschiedliche Berechtigungen zugewiesen sind. Somit kann durch das Einrichten der - zweiten - Adresse im Kommunikationsendgerät KE1, KE2, KE3 für einen Zugriff auf einen Alternativ-Gatekepper auf einfache Weise gesteuert werden, welche Berechtigungen einem Kommunikationsendgerät KE1, KE2, KE3 bzw. einem dem Kommunikationsendgerät KE1, KE2, KE3 zugeordneten Teilnehmer im Asylmodus zugewiesen werden.

Im folgenden wird davon ausgegangen, dass der erste Gatekeeper G-A oder das zugeordnete Netzwerksegment N-A gestört bzw. ausgefallen sind und dass sich das erste Kommunikationsendgerät KE1 infolge der Störung bzw. des Ausfalls am zweiten Gatekeeper G-B im Asylmodus anmeldet. Daraufhin wird dem ersten Kommunikationsendgerät KE1 vom zweiten Gatekeeper G-B temporär eine Rufnummer und das entsprechende Standardprofil zugewiesen. Somit kann das erste Kommunikationsendgerät KE1 einen Verbindungsaufbau über den zweiten Gatekeeper G-B als Alternativ-Gatekeeper initialisieren. Bei einem Verbindungsaufbau wird nicht die vom zweiten Gatekeeper G-B zugeordnete temporäre Rufnummer als Absenderadresse mitübermittelt, sondern die ursprünglich - vom ersten Gatekeeper G-A - vergebene Rufnummer 4711. Auf diese Weise ist sichergestellt, dass das erste Kommunikationsendgerät KE1 bzw. der dem ersten Kommunikationsendgerät KE1 zugeordnete Teilnehmer Tln an der gerufenen Endstelle identifizierbar ist. Dies ist insbesondere bei Notrufen von entscheidender Bedeutung, bei denen ein den Notruf initialisiernder Anrufer häufig anhand der mitübermittelten Absender-Rufnummer identifiziert und lokalisiert wird.

Handelt es sich bei dem dem ersten Kommunikationsendgerät KE1 zugeordneten Teilnehmer Tln um einen VIP-Teilnehmer, so bleibt dem Teilnehmer Tln bzw. dem ersten Kommunikationsendgerät KE1 die vom zweiten Gatekeeper G-B zugeordnete Rufnummer auch über die Dauer der Verbindung hinaus zugeordnet. Somit ist der Teilnehmer Tln bzw. das erste Kommunikationsendgerät KE1 auch zu einem späteren Zeitpunkt unter dieser Rufnummer erreichbar. In derartigen Fällen besteht die Möglichkeit, für einen eingehenden Verbindungswunsch mit der Rufnummer 4711 eine Anrufumleitung vom ersten Gatekeeper G-A auf den zweiten Gatekeeper G-B einzurichten. Die Anrufumleitung ist in diesem Fall im "Amt", d.h. in einer externen, nicht im Kommunikationssystem KS angeordneten Einrichtung einzurichten.

Für den Fall, dass der erste und der zweite Gatekeeper G-A, G-B über den gleichen Rufnummernplan verfügen, kann dem ersten Kommunikationsendgerät KE1 vom zweiten Gatekeeper G-B anstelle der temporären Rufnummer die gleiche - ursprünglich vom ersten Gatekeeper G-A zugeordnete - Rufnummer 4711 zugewiesen werden.

Ein wesentlicher Vorteil des erfindungsgemäßen Verfahrens besteht darin, dass sich - insbesondere in großen Kommunikationssystemen KS - der Aufwand für die Einrichtung und Administration von Endgeräte-Profilen erheblich reduziert. Beispielsweise müssten bei einem Kommunikationssystem KS mit 10 Gatekeepern und 10.000 angeschlossenen Kommunikationsendgeräten nach dem Stand der Technik 20.000 Endgeräte-Profile und damit auch Rufnummern vorgeleistet werden. Durch das erfindungsgemäße Verfahren wird erreicht, dass beispielsweise bei einem Erlang-Wert von 0, 1 eine Bevorratung von 100 zuweisbaren Rufnummern pro Gatekeeper und die Festlegung nur eines Asyl-Profils PAsyl pro Gatekeeper ausreichend ist. Die Gesamtzahl der im Kommunikationssystem KS benötigten Rufnummern beträgt beim erfindungsgemäßen Verfahren somit lediglich 11.000 bei 10.000 Endgeräte-Profilen zuzüglich 10 Asyl-Profilen.

## Patentansprüche

1. Verfahren zum Betrieb eines Kommunikationssystems (KS), bestehend aus mehreren Kommunikationseinrichtungen (G-A, G-B, G-C), mehreren Kommunikationsendgeräten (KE1, KE2, KE3) und einem die Kommunikationsendgeräte (KE1, KE2, KE3) mit den Kommunikationseinrichtungen (G-A, G-B, G-C) verbindenden Kommunikationsnetz (IP-N),
wobei in den Kommunikationsendgeräten (KE1, KE2, KE3) jeweils
- eine erste Adresse für eine Verbindung mit einer dem jeweiligen Kommunikationsendgerät (KE1) zugeordneten Heimat-Kommunikationseinrichtung (G-A) und
- eine zweite Adresse für eine Verbindung mit einer Alternativ-Kommunikationseinrichtung (G-B)
gespeichert sind,
**dadurch gekennzeichnet,**
**dass** in der Alternativ-Kommunikationseinrichtung (G-B) mindestens ein standardisierte endgeräte-relevante Daten umfassendes Endgeräte-Profil (PAsyl) gespeichert wird, durch das eine begrenzte Anzahl von den Kommunikationsendgeräten (KE1, KE2, KE3) zuweisbaren Rufnummern verwaltet werden und das ein Standardprofil umfasst sowie unterschiedlichen, mittels der zweiten Adresse auf die Alternativ-Kommunikationseinrichtung (G-B) zugreifenden Kommunikationsendgeräten (KE1, KE3) zugewiesen werden kann, derart dass diesen Kommunikationsendgeräten (KE1, KE3) für einen Verbindungsaufbau temporär eine Rufnummer und das entsprechende Standardprofil zugewiesen werden, wobei bei einer von einem Kommunikationsendgerät (KE1) initialisierten Verbindung anstelle der temporär vergebenen Rufnummer die von der Heimat-Kommunikationseinrichtung (G-A) zugeordnete Rufnummer (4711) als Absenderadresse mitübermittelt wird.

2. Verfahren nach Patentanspruch 1,
**dadurch gekennzeichnet,**
**dass** bei einem Zugriff eines Kommunikationsendgerätes (KE1, KE3) auf die Alternativ-Kommunikationseinrichtung (G-B)
- eine dem Kommunikationsendgerät (KE1, KE3) von der Heimat-Kommunikationseinrichtung (G-A) zugeordnete Rufnummer (4711, 6300, 6529),
- eine dem Kommunikationsendgerät (KE1, KE3) im Kommunikationsnetz (IP-N) zugeordnete Adressinformation, und
- eine die Zuweisung des Endgeräte-Profils (PAsyl) initiierende Asyl-Information
mitübermittelt werden.

3. Verfahren nach Patentanspruch 1 oder 2,
**dadurch gekennzeichnet,**
**dass** eine Zuweisung einer Rufnummer an ein Kommunikationsendgerät (KE1) nur für die Dauer einer Verbindung erfolgt.

4. Verfahren nach einem der vorhergehenden Patentansprüche,
**dadurch gekennzeichnet,**
**dass** bei bestimmten einem Kommunikationsendgerät (KE1, KE2, KE3) zugeordneten Teilnehmern (Tln) eine Zuweisung der Rufnummern auch über die Dauer der Verbindung hinaus erfolgt.

5. Verfahren nach einem der vorhergehenden Patentansprüche,
**dadurch gekennzeichnet,**
**dass** für einen Verbindungsaufbau mit dem Kommunikationsendgerät (KE1) eine Anrufumleitung von der Heimat-Kommunikationseinrichtung (G-A) zur Alternativ-Kommunikationseinrichtung (G-B) eingerichtet wird.

6. Verfahren nach einem der vorhergehenden Patentansprüche,
**dadurch gekennzeichnet,**
**dass** durch das Endgeräte-Profil (PAsyl) einem Kommunikationsendgerät (KE1, KE2, KE3) zuweisbare Berechtigungen verwaltet werden.

7. Verfahren nach Patentanspruch 6,
**dadurch gekennzeichnet,**
**dass** unterschiedlichen, einem Kommunikationsendgerät (KE1, KE2, KE3) zugeordneten Teilnehmern unterschiedliche Berechtigungen zuweisbar sind.

8. Verfahren nach einem der vorhergehenden Patentansprüche,
**dadurch gekennzeichnet,**
**dass** in unterschiedlichen Kommunikationseinrichtungen (G-A, G-B) unterschiedliche Endgeräte-Profile (PAsyl) eingerichtet werden.

9. Kommunikationssystem (KS), bestehend aus mehreren Kommunikationseinrichtungen (G-A, G-B, G-C), mehreren Kommunikationsendgeräten (KE1, KE2, KE3) und einem die Kommunikationsendgeräte (KE1, KE2, KE3) mit den Kommunikationseinrichtungen (G-A, G-B, G-C) verbindenden Kommunikationsnetz (IP-N), mit einer in den Kommunikationsendgeräten (KE1, KE2, KE3) jeweils angeordneten Speichereinrichtung zur Speicherung
- einer ersten Adresse für eine Verbindung mit einer dem jeweiligen Kommunikationsendgerät (KE1) zugeordneten Heimat-Kommunikationseinrichtung (G-A)
- einer zweiten Adresse für eine Verbindung mit einer Alternativ-Kommunikationseinrichtung (G-B)
**dadurch gekennzeichnet,**
**dass** in der Alternativ-Kommunikationseinrichtung (G-B) mindestens ein standardisierte endgeräte-relevante Daten umfassendes Endgeräte-Profil (PAsyl) vorgesehen ist, durch das eine begrenzte Anzahl von den Kommunikationsendgeräten (KE1, KE2, KE3) zuweisbaren Rufnummern verwaltbar ist und das ein Standardprofil umfasst sowie unterschiedlichen, mittels der zweiten Adresse auf die Alternativ-Kommunikationseinrichtung (G-B) zugreifenden Kommunikationsendgeräten (KE1, KE3) zuweisbar ist, derart dass diesen Kommunikationsendgeräten (KE1, KE3) für einen Verbindungsaufbau temporär eine Rufnummer und das entsprechende Standardprofil zuweisbar sind, wobei bei einer von einem Kommunikationsendgerät (KE1) initialisierten Verbindung anstelle der temporär vergebenen Rufnummer die von der Heimat-Kommunikationseinrichtung (G-A) zugeordnete Rufnummer (4711) als Absenderadresse mitübermittelt wird.

10. Kommunikationssystem (KS) nach Patentanspruch 9,
**dadurch gekennzeichnet,**
**dass** das Kommunikationsnetz (IP-N) ein IP-basiertes Rechnernetz ist und die Kommunikationsendgeräte (KE1, KE2, KE2) IP-fähige Endgeräte sind.

## Claims

1. Method for operation of a communications system (KS) comprising several gatekeepers (G-A, G-B, G-C), several communications terminals (KE1, KE2, KE3) and a communications network (IP-N) connecting the communications terminals (KE1, KE2, KE3) with the gatekeepers (G-A, G-B, G-C), wherein in each communications terminal (KE1, KE2, KE3) are stored:
- a first address for a connection with a home gatekeeper (G-A) allocated to the respective communications terminal (KE1), and
- a second address for connection with an alternative gatekeeper (G-B), **characterised in that** in the alternative gatekeeper (G-B) is stored at least one standardised terminal profile (PAsyl) which comprises terminal-relevant data and by means of which are administered a limited number of call numbers allocatable to the communications terminals (KE1, KE2, KE3) and which comprises a standard profile and can be allocated to different communications terminals (KE1, KE3) accessing the alternative gatekeeper by means of the second address, such that a call number and the corresponding standard profile are temporarily allocated to these communications terminals (KE1, KE3) in order to create the connection, wherein on a connection initialised by a communications terminal (KE1), instead of the temporarily allocated call number, the call number (4711) allocated by the home gatekeeper (G-A) is co-transmitted as a sender address.

2. Method according to claim 1, **characterised in that** on access of a communications terminal (KE1, KE3) to the alternative gatekeeper (G-B), the following are co-transmitted:
- a call number (4711, 6300, 6529) allocated to the communications terminal (KE1, KE3) by the home gatekeeper (G-A),
- an address information allocated to the communications terminal (KE1, KE3) in the communications network (IP-N), and
- an Asyl information initiating the allocation of the terminal profile (PAsyl).

3. Method according to claim 1 or 2, **characterised in that** a call number is allocated to a communications terminal (KE1) only for the duration of a connection.

4. Method according to any one of the preceding claims, **characterised in that** for specific subscribers (T1n) allocated to a communications terminal (KE1, KE2, KE3), the call numbers are also allocated beyond the duration of the connection.

5. Method according to any one of the preceding claims, **characterised in that** to create the connection with the communications terminal (KE1), a call diversion is set up from the home gatekeeper (G-A) to the alternative gatekeeper (G-B).

6. Method according to any one of the preceding claims, **characterised in that** authorisations which can be allocated to a communications terminal (KE1, KE2, KE3) are administered by the terminal profile (PAsyl).

7. Method according to claim 6, **characterised in that** different authorisations can be allocated to different subscribers allocated to a communications terminal (KE1, KE2, KE3).

8. Method according to any one of the preceding claims, **characterised in** different terminal profiles (PAsyl) are set up in different gatekeepers (G-A, G-B).

9. Communications system (KS) comprising several gatekeepers (G-A, G-B, G-C), several communications terminals (KE1, KE2, KE3) and a communications network (IP-N) connecting the communications terminals (KE1, KE2, KE3) with the gatekeepers (G-A, G-B, G-C), with a memory device arranged in each of the communications terminals (KE1, KE2, KE3) for storage of:
- a first address for connection with a home gatekeeper (G-A) allocated to the respective communications terminal (KE1), and
- a second address for connection with an alternative gatekeeper (G-B), **characterised in that** in the alternative gatekeeper (G-B) is provided at least one standardised terminal profile (PAsyl) which comprises terminal-relevant data and by means of which are administered a limited number of call numbers allocatable to the communications terminals (KE1, KE2, KE3) and which comprises a standard profile and can be allocated to different communications terminals (KE1, KE3) accessing the alternative gatekeeper by means of the second address, such that a call number and the corresponding standard profile can be temporarily allocated to these communications terminals (KE1, KE3) in order to create the connection, wherein on a connection initialised by a communications terminal (KE1), instead of the temporarily allocated call number, the call number (4711) allocated by the home gatekeeper (G-A) is co-transmitted as a sender address.

10. Communications system (KS) according to claim 9, **characterised in that** the communications network (IP-N) is an IP-based computer network and the communications terminals (KE1, KE2, KE3) are IP-compatible terminals.

## Revendications

1. Procédé servant à faire fonctionner un système de communication (KS) constitué de plusieurs dispositifs de communication (G-A, G-B, G-C), de plusieurs terminaux de communication (KE1, KE2, KE3) et d'un réseau de communication (IP-N) reliant les terminaux de communication (KE1, KE2, KE3) aux dispositifs de communication (G-A, G-B, G-C),
sachant que sont mémorisées dans les terminaux de communication (KE1, KE2, KE3) respectivement
- une première adresse pour une connexion avec un dispositif de communication de rattachement (G-A) associé au terminal de communication respectif (KE1) et
- une deuxième adresse pour une connexion avec un dispositif de communication alternatif (G-B),
**caractérisé en ce**
**qu'**au moins un profil de terminaux (PAsyl) comprenant des données standardisées importantes pour les terminaux est mémorisé dans le dispositif de communication alternatif (G-B), lequel profil permet d'administrer un nombre limité de numéros d'appel pouvant être affectés aux terminaux de communication (KE1, KE2, KE3), qui comprend un profil standard et qui peut être affecté à divers terminaux de communication (KE1, KE3) accédant au dispositif de communication alternatif (G-B) au moyen de la deuxième adresse de telle manière qu'un numéro d'appel ainsi que le profil standard correspondant sont affectés temporairement auxdits terminaux de communication (KE1, KE3), sachant que dans le cas d'une connexion initialisée par un terminal de communication (KE1), le numéro d'appel (4711) alloué par le dispositif de communication de rattachement (G-A) peut être transféré en lieu et place du numéro d'appel attribué temporairement en tant qu'adresse d'émission.

2. Procédé selon la revendication 1,
**caractérisé en ce**
**que** lorsqu'un terminal de communication (KE1, KE3) accède au dispositif de communication alternatif (G-B), sont tranférés conjointement
- un numéro d'appel (4711, 6300, 6529) alloué au terminal de communication (KE1, KE3) par le dispositif de communication de rattachement (G-A),
- une information relative à l'adresse associée au au terminal de communication (KE1, KE3) dans le réseau de communication (IP-N), et
- une information Asyl initialisant l'affectation du profil des terminaux (PAsyl).

3. Procédé selon la revendication 1 ou 2,
**caractérisé en ce**
**qu'**une affection d'un numéro d'appel à un terminal de communication (KE1) n'est effectuée que pour la durée d'une connexion.

4. Procédé selon l'une queconque des revendications précédentes,
**caractérisé en ce**
**que** dans le cas de certains abonnés (Tln) associés à un terminal de communication (KE1, KE2, KE3),une affectation des numéros d'appel est effectuée également au-delà de la durée de la connexion.

5. Procédé selon l'une quelconque des revendications précédentes,
**caractérisé en ce**
**que** pour établir une connexion avec le terminal de communication (KE1), une déviation d'appel du dispositif de communication de rattachement (G-A) en direction du dispositif de communication alternatif (G-B) est mise en place.

6. Procédé selon l'une queconque des revendications précédentes,
**caractérisé en ce**
**que** les profils des terminaux (PAsyl) permet d'administrer des autorisations pouvant être affectées à un terminal de communication (KE1,KE2, KE3).

7. Procédé selon la revendication 6, précédentes,
**caractérisé en ce**
**que** diverses autorisations peuvent être affectées à divers abonnés associés à un terminal de communication (KE1,KE2, KE3).

8. Procédé selon l'une queconque des revendications précédentes,
caractérisé en ce
divers profils de terminaux (PAsyl) sont mis en place dans divers dispositifs de communication (G-A, G-B).

9. Système de communication (KS) constitué de plusieurs dispositifs de communication (G-A, G-B, G-C), de plusieurs terminaux de communication (KE1, KE2, KE3) et d'un réseau de communication (IP-N) reliant les terminaux de communication (KE1, KE2, KE3) aux dispositifs de communication (G-A, G-B, G-C),
comportant un dispositif de mémorisation disposé respectivement dans les terminaux de communication (KE1, KE2, KE3) servant à mémoriser
- une première adresse pour une connexion avec un dispositif de communication de rattachement (G-A) associé au terminal de communication respectif (KE1) et
- une deuxième adresse pour une connexion avec un dispositif de communication alternatif (G-B),
**caractérisé en ce**
**qu'**est prévu dans le dispositif de communication alternatif (G-B) au moins un profil de terminaux (PAsyl) comprenant des données standardisées importantes pour les terminaux , lequell profil permet d'administrer un nombre limité de numéros d'appel pouvant être affectés aux terminaux de communication (KE1, KE2, KE3), qui comprend un profil standard et qui peut être affecté à divers terminaux de communication (KE1, KE3) accédant au dispositif de communication alternatif (G-B) au moyen de la deuxième adresse, de telle manière qu'un numéro d'appel et le profil standard correspont peuvent être affectés temporairement auxdits terminaux de communication (KE1, KE3), pour établir une connexion initialisée par un terminal de communication (KE1), le numéro d'appel (4711) alloué par le dispositif de communication de rattachement (G-A) peut être transféré en lieu et place du numéro d'appel attribué temporairement en tant qu'adresse d'émission.

10. Procédé selon la revendication 6, précédentes,
**caractérisé en ce**
**que** le réseau de communication (IP-N) est un réseau IP d'ordinateurs, et en ce que les terminaux de communication (KE1, KE2, KE3) sont des terminaux adaptés IP.
